# EUROPEAN PATENT SPECIFICATION

(11) **EP 3 859 691 B1**
(45) Date of publication and mention of the grant of the patent: **14.08.2024**
(21) Application number: 20155219.7
(22) Date of filing: 03.02.2020
(51) Int. Cl.: G07C 9/30, G06F 3/01, B60K 35/00, B60K 35/10, B60R 25/10, G06F 3/00

(54) **VEHICLE COMPRISING SENSORS FOR TRIGGERING UNEXPECTED FUNCTION METHOD AND COMPUTER PROGRAM FOR TRIGGERING UNEXPECTED FUNCTIONS IN A VEHICLE**
FAHRZEUG MIT SENSOREN ZUR AUSLÖSUNG EINES UNERWARTETEN FUNKTIONSVERFAHRENS UND COMPUTERPROGRAMM ZUR AUSLÖSUNG UNERWARTETER FUNKTIONEN IN EINEM FAHRZEUG
VÉHICULE COMPORTANT DES CAPTEURS POUR DÉCLENCHER UNE FONCTION INATTENDUE, PROCÉDÉ ET PROGRAMME INFORMATIQUE POUR DÉCLENCHER DES FONCTIONS INATTENDUES DANS UN VÉHICULE

(43) Date of publication of application: 04.08.2021
(73) Proprietor: Motherson Innovations Company Limited, London EC2N 2AX (GB)
(72) Inventor: Dormanns, Jan, 79183 Waldkirch (DE); Weingärtner, Torsten, 79108 Freiburg (DE)
(74) Representative: Westphal, Mussgnug & Partner Patentanwälte mbB

(56) References cited:
- EP-A1- 2 161 168
- US-A1- 2009 240 400
- ANONYMOUS: "List of Easter eggs in Tesla products - Wikipedia", 21 October 2019 (2019-10-21), XP055705296, Retrieved from the Internet <URL:https://web.archive.org/web/20191021001500/https://en.wikipedia.org/wiki/List_of_Easter_eggs_in_Tesla_products> [retrieved on 20200616]

## Description

The present disclosure relates to a vehicle comprising sensors for triggering unexpected functions. Moreover the present invention relates to a method for triggering unexpected functions in a vehicle and to a computer program executing such a method or operating such a vehicle.

In order to increase the comfort of a vehicle the manufacturers are striving for integrating more and more functions into the vehicle. Some of these functions may be unexpected functions. One example of such unexpected functions is that one or more vehicle doors can be closed by pressing the brake pedal, provided the vehicle is parked. Further unexpected functions are provided by so-called "Easter eggs". In this case, the Easter egg is a computer program in which a certain function is defined and the interaction by which the function is triggered. Although the functions provided by the Easter eggs may be useful, their main task is to increase the joy of the persons, in particular the driver and the passengers, interacting with the vehicle. Such Easter eggs are disclosed under following URL:
https://www.cnet.com/pictures/tesla-easter-eggs/

As an example the sound system generates a tone or sound when the direction indicator lever is moved. Another example is that the sound system plays a Christmas song when one of the persons says "ho-ho-ho".

Further information on such Easter eggs are disclosed in "Anonymous: List of Easter eggs in Tesla products - Wikipedia" .

A common feature of the functions provided by the Easter eggs is that they are triggered by a defined interaction the person activating the Easter egg is informed about by the vehicle information unit, i.e., by a respective information displayed on a vehicle display. Although the functions provided by the Easter eggs may be unexpected, the way they are triggered is disclosed before the first execution. Moreover, the interaction takes place via usual Human-Device-Interfaces or Human-Machine-interfaces like touch-displays, steering wheels and indicator levers.

Reference is also made to US 2009/240400 A1 and EP 2 161 168 A1 which, however, do not describe any Easter eggs but vehicle security and anti-theft systems.

It is one task of one embodiment of the present disclosure to propose a vehicle in which the joy for the persons interacting with the vehicle is further increased, thereby strengthening the relation between the person and the vehicle. Moreover, an embodiment of the present disclosure has the objective to propose a method for triggering unexpected functions in a vehicle by which the joy for the persons interacting with the vehicle is further increased.

The task is solved by the features specified in claims 1, 11 and 12. Advantageous embodiments are the subject of the dependent claims.

According to an embodiment of the present disclosure the vehicle comprises a number of sensors arranged inside the vehicle, the sensors being adapted for an interaction with one or more persons that are located inside or in the surroundings of the vehicle, the sensors triggering one or more unexpected functions executed by the vehicle upon an interaction between the sensors and the person, wherein the interaction is unknown or unexpected to the person at least when the function is triggered for the first time by the person.

As mentioned initially it is known to trigger a function which may as such be unknown and thus unexpected by an interaction the person of the vehicle is previously informed about. In the prior art one Easter egg can be chosen from a number of Easter eggs by pressing a specific area of a touch display. After that the default settings are shown that may be changed. However, an interaction with a human-device-interface or human-machine-interface by way of a physical contact is required. As mentioned, a certain sound may be generated when moving the indicator lever. The person may chose the sound and the respective interaction. As an example he may set the time the indicator lever must be kept in a certain position.

In contrast to that the present disclosure proposes to trigger an unexpected function by an interaction and/or location of interaction that is previously not known by the person interacting with the vehicle. In the context of the present disclosure the unknown interaction is to be understood such that the vehicle control unit only informs the person about the fact that certain Easter eggs are installed, however, does not tell which functions they comprise and how and where they are triggered.

As a result the unexpected function is randomly triggered by the person. The person is thus inspired to try to find the "Easter egg", thereby encouraging him to interact with the vehicle in a joyful manner. As an example an unexpected function may be triggered by clapping in one's hands. A contact with a human-machine-interface of the vehicle is not needed. As a result the sound system is activated and plays a certain song. At least when the function is triggered for the first time by the corresponding person he does not know the connection between the cause and the effect. Thus the joy for the persons interacting with the vehicle is further increased compared to known Easter eggs.

According to the invention, in order to comply with safety concerns the unexpected functions are triggered only when the vehicle stands still to avoid distraction of the driver. Alternatively these functions are triggered only when the velocity of the vehicle is below a certain value and in case the vehicle control unit considers the traffic situation as uncritical. In this case these functions do not influence the movement of the vehicle or any safety functions like the vehicle lights.

In a further embodiment the sensors also trigger functions that are known to the person. As an example touch sensitive sensors may be located inside the armrest. Touching the armrest in a certain area activates the window lifter such that the respective window of the vehicle door is lifted or lowered. However, by tapping on the armrest outside the marked lifter area but in the range of the sensitive sensor in a certain sequence another function, i.e., an unexpected function, may be triggered. This unexpected function could be that the interior and/or exterior lighting flashes according to the sequence the person taps on the armrest. Again, the joy for the persons interacting with the vehicle is further increased compared to known Easter eggs. It is noted that in this embodiment the unexpected functions can be triggered without the need to equip the vehicle with additional sensors. One may thus distinguish between two groups of sensors. The sensors of the first group trigger known and unknown functions while the sensors of the second group only trigger unknown functions. While the sensors of the second group are exclusively used for the implementation of the Easter eggs the sensors of the first group are typically present in modern vehicles but do not only trigger the intended functions but also the unexpected or unknown functions.

In another embodiment the sensors are embodied as microphones, cameras, eye-tracking sensors or gesture control sensors. These sensors are usually present in modern vehicles. It is thus not necessary to equip the vehicle with additional sensors to trigger unexpected functions.

According to an advanced embodiment the sensors are embodied as force sensors, strain gauges, piezo-elements, proximity sensors or touch-sensitive sensors. At least some of these sensors may be capacitive or resistive sensors. These sensors are available at reasonable costs so that the additional investments can be kept low. It is also possible to include sensors typically present in modern vehicles into an Easter egg. As an example, force sensors are included in the vehicle seats to detect whether or not a person is sitting on a specific seat. This information is typically used for controlling whether or not the seatbelts are fastened. Moreover, this information may be used to activate the passenger airbag. However, it is so far not known to use this information to trigger the unknown function of an Easter egg.

In a refined embodiment the sensors are embodied as printed electronics and/or smart textiles. Printed electronics may be inserted into an injection mold when a certain trim part of the vehicle is produced. The additional effort is small. Smart textiles can be integrated e.g. into the seat cover or seatbelts also with minimal additional effort. The possibilities to trigger the unexpected functions can be increased at minimal additional expenses.

In a further embodiment the sensors are arranged in the vehicle such that the sensors are invisible or hidden for the person or that the sensors are not marked. By way of an example a sensor may be invisibly integrated into a trim part of the vehicle, such as the instrument panel. Alternatively the sensor may be arranged in a secluded or hidden position such that the person usually does not take note of the sensor. In another alternative the sensor as such may be visible to the person but not marked accordingly and a person would not identify the sensor as such. A person cleaning the instrument panel with a duster may accidentally trigger an unexpected function. The function could be that a message is shown on the display that the vehicle is happy to be cleaned. Moreover, the interior lighting may flash as a sign of happiness.

According to another embodiment the vehicle comprises at least one vehicle part wherein the sensors are arranged on the front side, inside or on the rear side of the vehicle part. The vehicle part may in particular be an interior trim part of the vehicle although the sensors may also be arranged on other vehicle parts such as exterior trim parts. The sensors can be arranged on the front side of the vehicle part which is the side visible for a person. Alternatively the sensors can be arranged inside the vehicle part such that they are fully integrated into the vehicle part or arranged on the rear side. In the latter two cases the sensors are not directly accessible to the person using the vehicle. Interior trim parts often comprise a layer composition. In this case the sensors may be integrated into the interior trim part in laminate or sandwich construction.

In another embodiment the unexpected functions and/or the interactions by which the unexpected functions are executed are downloadable from the internet or are updatable. The unexpected functions are stored in a storage device of the vehicle control unit. Due to the fact that the logic behind the unexpected functions and the interaction by which they are triggered are editable in this embodiment already discovered Easter eggs which become boring can be replaced by other unknown Easter eggs thereby keeping the joy for the persons interacting with the vehicle high and thrilling. The update may be conducted as a service, e.g., by a mechanic in the car repair shop, by the vehicle itself or by a respective app run on a smartphone or tablet that can communicate with the storage of the vehicle control unit.

According to an advanced embodiment the unexpected functions and/or the interactions by which the unexpected functions are executed are modifiable by a person having access to an advanced menu of the vehicle control unit. A person, in most cases the owner or a frequent driver of the vehicle, may be provided with respective access rights to the vehicle control unit such that he can edit an installed Easter egg by changing the logic of preset functions and preset triggers and develop his own Easter egg consisting of a function and its corresponding trigger. The access may be granted upon the condition that the Easter egg was executed at least once. The execution is taken as a sign that the Easter egg was found. The joy caused by the interaction with the vehicle can be further increased thereby strengthening the relationship between the person and the vehicle. In this way new shortcuts can be created to select favorite functions without the need of extra buttons or many clicks true the car menu.

In a refined embodiment the edited unexpected functions and/or the interactions by which the unexpected functions are executed are uploadable to the internet. The person who has created its own Easter egg can share this Easter egg with other persons driving the same or similar type of vehicle.

Similarly the driver or the owner of the respective vehicle can chose to share the finding an Easter egg e.g. by means of social media. This is an important way for the OEM of promoting a modern car as a brand.

An implementation of the teaching of the disclosure is directed to a method for triggering unexpected functions in a vehicle, the method comprising the following steps:
- arranging a number of sensors inside the vehicle, the sensors being adapted for an interaction with one or more persons that are located inside or in the surroundings of the vehicle,
- triggering one or more unexpected functions by means of the sensors upon an interaction between the sensors and the person wherein the interaction is unknown or unexpected to the person when the function is triggered for the first time by the person , and
- executing the unexpected functions by the vehicle.

A realization of the teaching of the present disclosure is directed to a computer program for executing a method according to implementation previously mentioned for triggering unexpected functions in a vehicle and/or for operating a vehicle according to one of the embodiments mentioned above, wherein
- the vehicle comprises a number of sensors arranged inside the vehicle, the sensors being adapted for an interaction with one or more persons that are located inside or in the surroundings of the vehicle,
the computer program comprising program means for causing a vehicle control unit to execute the following steps when the computer program is executed on the vehicle control unit:
- triggering one or more unexpected functions upon an interaction between the sensors and the person wherein the interaction is unknown or unexpected to the person when the function is triggered for the first time by the person, and
- executing the unexpected functions by the vehicle.

The advantages and technical effects described with reference to the vehicle equally apply to the method and the computer program. In short at least when the function is triggered for the first time by the respective person he does not know the connection between the cause and the effect. Thus the joy for the persons interacting with the vehicle is further increased compared to vehicles known in the prior art. The relationship between the person and the respective vehicle is strengthened.

The present invention is described in detail with reference to the drawings attached wherein
- Figure 1: shows an "Easter egg" according to the present invention,
- Figure 2A: shows a part of a vehicle equipped with a number of sensors that can trigger at least one unexpected function that is executed by an interaction unknown to a person,
- Figure 2B: is a principle sectional view of a vehicle part including a sensor arranged in a first way,
- Figure 2C: is a principle sectional view of a vehicle part including a sensor arranged in a second way,
- Figure 2D: is a principle sectional view of a vehicle part including a sensor arranged in a third way,
- Figure 3: shows an instrument panel equipped with a sensor that can trigger at least one unexpected function that is executed by an interaction unknown to a person,
- Figures 4A to 4C: show different views of an armrest equipped with a sensor that can trigger at least one unexpected function that is executed by an interaction unknown to a person,
- Figures 5A to 5C: show three examples of interactions by which an unexpected function may be triggered, and
- Figures 6A to 6C: show three further examples of interactions by which an unexpected function may be triggered.

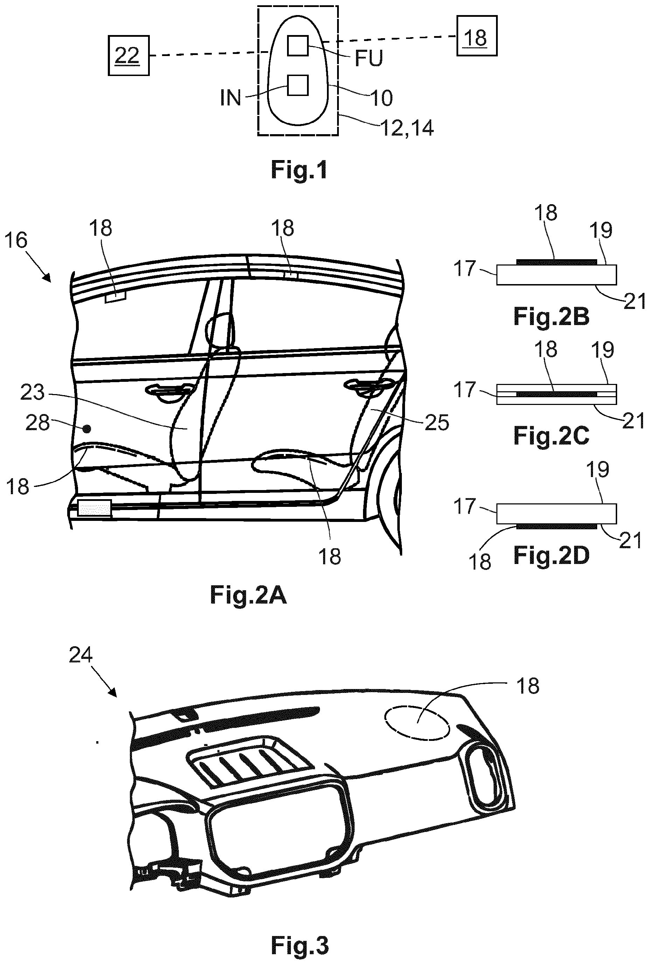

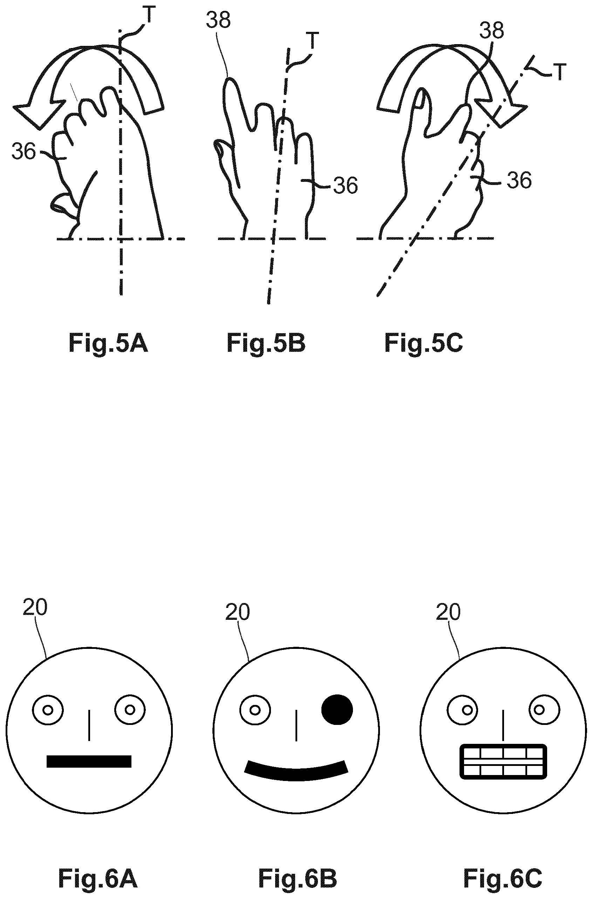

Figure 1 is a principle drawing of an "Easter egg" 10 according to the present disclosure. The Easter egg 10 is a computer-program that is stored on a storage device 12 of a vehicle control unit 14. Within the context of the present disclosure the Easter egg 10 comprises an unexpected function FU that is executed by a vehicle 16 (see Figure 2). Moreover, the Easter egg 10 comprises an interaction IN between a sensor 18 arranged inside a vehicle 16 and a person 20 (see Figures 6A to 6B). The interaction IN is unknown or unexpected to the person 20 at least when the function is triggered for the first time by the person 20 because of the fact that the vehicle 16 does not comprise any marking that indicates the position of the sensor 18.

The vehicle control unit 14 can access an external Network, e.g. the internet 22 such that information regarding the Easter egg can be downloaded from the internet 22 or uploaded to the internet 22. Details will be explained later on.

Figure 2A shows a part of the vehicle 16 by means of a side view. The vehicle 16 comprises a number of vehicle parts 17, such as a front seat 23 and a back seat 25. Other examples of vehicle parts 17 may be trim parts like door inlays or instrument panels 24 (see Figure 3). The vehicle 16 is equipped with the vehicle control unit 14 on which one or more Easter eggs 10 are stored. The vehicle 16 comprises four sensors 18, one above the front seats 23, one above the back seats 25 of the vehicle 16 and two sensors 18 arranged inside the front seat 23 and the back seat 25, respectively. The sensor 18 arranged above the front seat 23 may be embodied84 as a camera, an eye-tracking sensor and/or a gesture control sensor. The sensor 18 arranged above the back seat 25 may be embodied as a microphone. The sensors 18 arranged inside the front seat 23 and the back seat 25 may be embodied as force sensors, strain gauges, piezo-elements and/or smart textiles. While the sensor 18 above the front seat 23 is visible to the persons 20, the sensors 18 arranged inside the front seat 23 and the back seat 25 as well as the sensor 18 arranged above the back seat 25 are invisible for the persons 20.

Figures 2B to 2D show different ways of how to arrange a sensor 18 in a given vehicle part 17. The vehicle part 17 comprises a front side 19 that is visible to the person 20 and a rear side 21 that is not visible to the person 20 or at least arranged such that it is only hardly visible to the person 20. In Figure 2B the sensor 18 is arranged on the front side 19 of the vehicle part 17 such that the sensor 18 is visible to the person 20 or at least directly contactable by the person 20. In Figure 2C the sensor 18 is integrated into the vehicle part 17. It is noted that the vehicle part 17 shown in Figure 2C has a layer composition comprising three layers. The sensor 18 is integrated into the vehicle part 18 by a laminate or sandwich construction and not accessible via the front side or the rear side.

In Figure 2D the sensor 18 is arranged on the rear side 21 of the vehicle part 17.

Figure 3 is a perspective view on an instrument panel 24 in which a sensor 18 is integrated. The sensor 18 may be embodied as a printed electronics and thus be integrated into the instrument panel 24 such that it is not visible to the person 20 and located at an unusual and unexpected area.

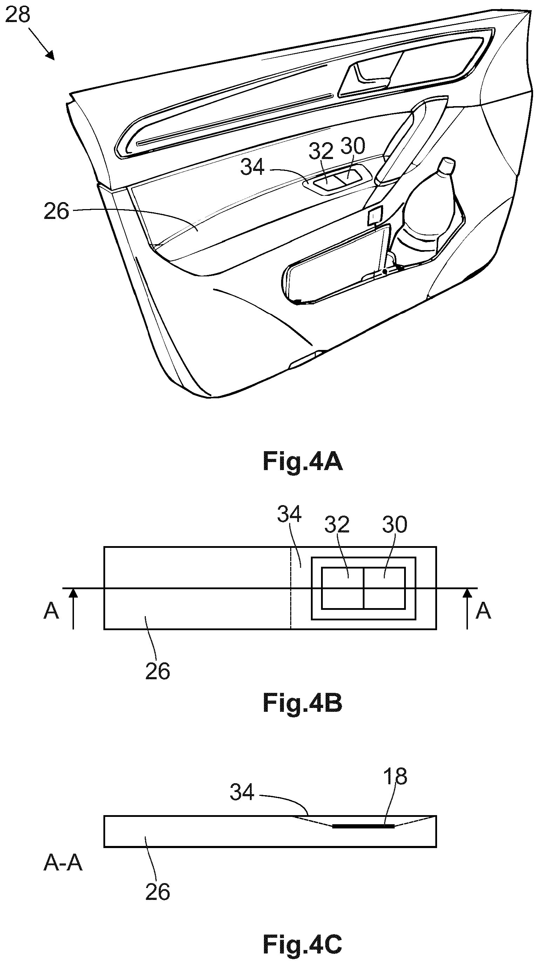

Figure 4A is a perspective view of an armrest 26 of a side door 28 of a vehicle 16. Figure 4B is a simplified top view of the armrest 26 and Figure 4C is a cross section through the armrest 26 along the cutting plane A-A defined in Figure 4B.

The armrest 26 is equipped with a sensor 18 (Figure 4C) that may be embodied as a touch sensitive sensor such as a capacitive or resistive sensor 18. Alternatively the sensor 18 may be embodied as a force sensor. As evident from Figure 4C the sensor 18 is located below the surface of the armrest 26. Usually the sensor 18 is used to lower or lift the window of the respective vehicle side door 28. To this end the person 20 touches the armrest 26 in a first area 30 or a second area 32. The sensor 18 arranged in the armrest 26 is able to detect that the person 20 touches the first area 30 or second area 32. The detection of a touch in the first area 30 may trigger the known and expected function that the window is lifted and the detection of a touch in the second area 32 may trigger the known and expected function that the window is lowered. However, as shown in Figures 4B and 4C, the area 34 monitored by the sensor 18 is bigger than the first area 30 and the second area 32. This property can be used in relation to the Easter eggs 10 as mentioned above. As an example in case the person 20 lets his finger rest inside the monitored area 34 but outside the first and the second area 32 a certain unexpected function FU may be triggered and executed by the vehicle 16. Such an unexpected function FU may be that a sound system of the vehicle 16 (not shown) generates a certain sound. At least for the first time the person 20 does not know why suddenly the sound system generates this sound as he would not expect that the sensor 18 is able to monitor an area going beyond the first area 30 and the second area 32. In this case the sensor 18 triggers functions that are known and expected to the person 20, namely lifting and lowering the window of the vehicle side door 28, but also triggers functions that are unexpected to the person 20, as an example the generation of a certain sound by the sound system.

Referring now to Figure 3 the invisible sensor 18 integrated into the instrument panel 24 does not have a function that is known and expected to the person 20. This sensor 18 is exclusively used to trigger one or more unexpected functions FU wherein the interaction IN is unknown to the person 20 at least when the function is triggered for the first time by the person 20.

In case he taps on the instrument panel 24 in a certain rhythm the sound system may play a song that fits to the rhythm. Alternatively in case the invisible sensor 18 detects a sweeping motion that is typical when the instrument panel 24 is cleaned, the sound system may generate sounds expressing a certain happiness or play the song "Car Wash". Beyond that the interior and/or exterior lighting may flash emphasizing that the vehicle 16 is cleaned. Thereby the person 20 is in a way rewarded for cleaning the vehicle 16. The same function may be triggered by the sensor 18 arranged above the front seat 23 (see Figure 2). This sensor 18 may also detect a sweeping motion executed by a person cleaning the vehicle windows from outside. In this case the person is not located inside the vehicle.

As already mentioned with respect to Figure 2 the sensor 18 located above the front seat 23 may be embodied as a gesture control sensor 18. Figures 5A to 5C show examples of gestures a person 20 may execute by his hands 36. He may turn his hand 36 counterclockwise around a turning axis T (Figure 5A), he may raise his index finger 38 (Figure 5B) or turn his hand 36 clockwise around the turning axis T. In each case the alignment of the turning axis T is different. These gestures may be used to trigger known functions of the vehicle 16. Turning the hand 36 counterclockwise or clockwise may tune down or up the volume of the sound system or lowering or rising the set-temperature of the air condition. Raising the index finger 38 may turn on or off the sound system or other components of the vehicle 16, e.g. the air condition. However, other gestures that are not used to trigger any known functions may be used to trigger unexpected functions FU. As an example when the person 20 clenches a fist the sound system may play the song "We are the champions".

The sensor 18 shown in Figure 2 that is located above the front seat 23 may also be embodied as an eye-tracking sensor 18 and/or a camera. In Figures 6A to 6C different facial expressions are illustrated. In case of Figure 6A the facial expression may be interpreted as bored or tired. As a result the sound system may tell a joke. In Figure 6B the person 20 blinks with his eye. As a result the comic figure "Super Mario" is shown on the display also blinking with his eyes. In Figure 6C the facial expression may be interpreted as angry or annoyed. In this case the sound system may play the song "Don't worry, be happy".

As mentioned above, the Easter egg 10 is a computer program stored on a storage device 12 of the vehicle 16. The computer program may already be installed on the storage device 12 by the vehicle manufacturer or can be downloaded from the internet 22. The person 20, in particular the driver is informed about the fact that an Easter egg 10 is installed, but does neither know which function the Easter egg comprises and by which function it is triggered. He thus may search purposefully for the Easter egg and/or be taken by surprise.

A person 20 may edit an Easter egg 10 or create his own Easter egg 10 and upload this Easter egg 10 to the internet 22 so that this Easter egg 10 can be shared by other persons in possession of the same or similar type of vehicle 16 or of a vehicle 16 in which this Easter egg 10 can be implemented. The possibility to edit an Easter egg 10 may be made dependent on whether or not it was executed at least once. The execution of the Easter egg 10 is an indication that it was found.

### Reference list

- 10: Easter egg
- 12: storage device
- 14: vehicle control unit
- 16: vehicle
- 18: sensor
- 19: front side
- 20: person
- 21: rear side
- 22: internet
- 23: front seat
- 24: instrument panel
- 25: back seat
- 26: armrest
- 28: side door
- 30: first area
- 32: second area
- 34: monitored area
- 36: hand
- 38: index finger

- FU: unknown function
- IN: interaction
- T: turning axis

## Claims

1. Vehicle (16), comprising
- a number of sensors (18) arranged inside the vehicle (16),
- the sensors (18) being adapted for interaction (IN) with one or more persons (20) that are located inside or in the surroundings of the vehicle (16),
- the sensors (18) triggering one or more unexpected functions (FU) executed by the vehicle (16) upon an interaction (IN) between the sensors (18) and the person (20), wherein the interaction (IN) is unknown or unexpected to the person (20) at least when the function (FU) is triggered for the first time by the person (20),
**characterized in that** the unexpected functions (FU) are triggered only when the vehicle (16) stands still or when the velocity of the vehicle (16) is below a certain value and in case the vehicle control unit considers the traffic situation as uncritical.

2. Vehicle (16) according to claim 1,
**characterized in that** the sensors (18) also trigger functions that are known to the person (20).

3. Vehicle (16) according to one of the preceding claims, **characterized in that** the sensors (18) are embodied as microphones, cameras, eye-tracking sensors or gesture control sensors.

4. Vehicle (16) according to one of the preceding claims, **characterized in that** the sensors (18) are embodied as force sensors, strain gauges, piezo-elements, proximity sensors, or touch-sensitive sensors.

5. Vehicle (16) according to claim 4,
**characterized in that** the sensors (18) are embodied as printed electronics and/or smart textiles.

6. Vehicle (16) according to one of the claims 4 or 5, **characterized in that** the sensors (18) are arranged in the vehicle (16) such that the sensors (18) are invisible or hidden for the person (20) or that the sensors (18) are not marked.

7. Vehicle (16) according to one of the preceding claims, **characterized in that** the vehicle comprises at least one vehicle part, and **in that** the sensors (18) are arranged on the front side, inside or on the rear side of the vehicle part.

8. Vehicle (16) according to one of the preceding claims, **characterized in that** the unexpected functions (FU) and/or the interactions (IN) by which the unexpected functions (FU) are executed are downloadable from the internet (22) or are updatable.

9. Vehicle (16) according to one of the preceding claims, **characterized in that** the unexpected functions (FU) and/or the interactions (IN) by which the unexpected functions (FU) are executed are editable by a person having access rights for the vehicle control unit (14).

10. Vehicle (16) according to claim 9,
**characterized in that** the edited unexpected functions (FU) and/or the interactions (IN) by which unexpected functions (FU) are executed are uploadable to the internet (22).

11. Method for triggering unexpected functions (FU) in a vehicle (16), the method comprising the following steps:
- arranging a number of sensors (18) inside the vehicle (16), the sensors (18) being adapted for an interaction (IN) with one or more persons (20) that are located inside or in the surroundings of the vehicle (16),
- triggering one or more unexpected functions (FU) by means of the sensors (18) upon an interaction (IN) between the sensors (18) and the person (20) wherein
o the interaction (IN) is unknown or unexpected to the person (20) when the function (FU) is triggered for the first time by the person (20)
- executing the unexpected functions (FU) by the vehicle (16),
**characterized in that**
the unexpected functions (FU) are triggered only when the vehicle (16) stands still or when the velocity of the vehicle (16) is below a certain value and in case the vehicle control unit considers the traffic situation as uncritical.

12. Computer program for executing a method according to claim 10 for triggering unexpected functions (FU) in a vehicle (16) and/or for operating a vehicle (16) according to any one of claims 1 to , wherein
- the vehicle (16) comprises a number of sensors (18) arranged inside the vehicle (16), the sensors (18) being adapted for an interaction (IN) with one or more persons (20) that are located inside or in the surroundings of the vehicle (16),
the computer program comprising program means for causing a vehicle control unit (14) to execute the following steps when the computer program is executed on the vehicle control unit (14):
- triggering one or more unexpected functions (FU) upon an interaction (IN) between the sensors (18) and the person (20) wherein
o the interaction (IN) is unknown or unexpected to the person (20) when the function (FU) is triggered for the first time by the person (20)
- executing the unexpected functions (FU) by the vehicle (16),
**characterized in that**
the unexpected functions (FU) are triggered only when the vehicle (16) stands still or when the velocity of the vehicle (16) is below a certain value and in case the vehicle control unit considers the traffic situation as uncritical.

## Patentansprüche

1. Fahrzeug (16), das aufweist:
- eine Anzahl von Sensoren (18), die innerhalb des Fahrzeugs (16) angeordnet sind,
- wobei die Sensoren (18) für eine Interaktion (IN) mit einer oder mehr Personen (20), die sich innerhalb oder in der Umgebung des Fahrzeugs (16) befinden, geeignet sind,
- wobei die Sensoren (18) eine oder mehr unerwartete Funktionen (FU), die durch das Fahrzeug (16) bei einer Interaktion (IN) zwischen den Sensoren (18) und der Person (20) ausgeführt werden, auslösen, wobei die Interaktion (IN) der Person (20) zumindest dann unbekannt oder unerwartet ist, wenn die Funktion (FU) zum ersten Mal durch die Person (20) ausgelöst wird,
**dadurch gekennzeichnet, dass** die unerwarteten Funktionen (FU) nur ausgelöst werden, wenn das Fahrzeug (16) stillsteht oder wenn die Geschwindigkeit des Fahrzeugs (16) unter einem bestimmten Wert liegt und falls die Fahrzeugsteuereinheit die Verkehrssituation als unkritisch betrachtet.

2. Fahrzeug (16) nach Anspruch 1,
**dadurch gekennzeichnet, dass** die Sensoren (18) auch Funktionen, die der Person (20) bekannt sind, auslösen.

3. Fahrzeug (16) nach einem der vorhergehenden Ansprüche, **dadurch gekennzeichnet, dass** die Sensoren (18) als Mikrofone, Kameras, Eye-Tracking-Sensoren oder Gestensteuerungssensoren ausgeführt sind.

4. Fahrzeug (16) nach einem der vorangehenden Ansprüche, **dadurch gekennzeichnet, dass** die Sensoren (18) als Kraftsensoren, Dehnungsmessstreifen, Piezo-Elemente, Näherungssensoren oder berührungsempfindliche Sensoren ausgeführt sind.

5. Fahrzeug (16) nach Anspruch 4,
**dadurch gekennzeichnet, dass** die Sensoren (18) als gedruckte Elektronik und/oder intelligente Textilien ausgeführt sind.

6. Fahrzeug (16) nach einem der Ansprüche 4 oder 5,
**dadurch gekennzeichnet, dass** die Sensoren (18) in dem Fahrzeug (16) so angeordnet sind, dass die Sensoren (18) für die Person (20) unsichtbar oder verborgen sind oder dass die Sensoren (18) nicht gekennzeichnet sind.

7. Fahrzeug (16) nach einem der vorhergehenden Ansprüche, **dadurch gekennzeichnet, dass** das Fahrzeug mindestens ein Fahrzeugteil aufweist und dass die Sensoren (18) an der Vorderseite, im Inneren oder an der Rückseite des Fahrzeugteils angeordnet sind.

8. Fahrzeug (16) nach einem der vorhergehenden Ansprüche, **dadurch gekennzeichnet, dass** die unerwarteten Funktionen (FU) und/oder die Interaktionen (IN), durch die die unerwarteten Funktionen (FU) ausgeführt werden, aus dem Internet (22) herunterladbar sind oder aktualisierbar sind.

9. Fahrzeug (16) nach einem der vorhergehenden Ansprüche, **dadurch gekennzeichnet, dass** die unerwarteten Funktionen (FU) und/oder die Interaktionen (IN), durch die die unerwarteten Funktionen (FU) ausgeführt werden, durch eine Person mit Zugriffsrechten für die Fahrzeugsteuereinheit (14) editierbar sind.

10. Fahrzeug (16) nach Anspruch 9,
**dadurch gekennzeichnet, dass** die bearbeiteten unerwarteten Funktionen (FU) und/oder die Interaktionen (IN), durch die die unerwarteten Funktionen (FU) ausgeführt werden, in das Internet (22) hochgeladen werden können.

11. Verfahren zum Auslösen unerwarteter Funktionen (FU) in einem Fahrzeug (16), wobei das Verfahren die folgenden Schritte aufweist:
- Anordnen einer Anzahl von Sensoren (18) im Inneren des Fahrzeugs (16), wobei die Sensoren (18) für eine Interaktion (IN) mit einer oder mehr Personen (20), die sich innerhalb oder in der Umgebung des Fahrzeugs (16) befinden, geeignet sind,
- Auslösen von einer oder mehr unerwarteten Funktionen (FU) mittels der Sensoren (18) bei einer Interaktion (IN) zwischen den Sensoren (18) und der Person (20), wobei
o die Interaktion (IN) für die Person (20) unbekannt oder unerwartet ist, wenn die Funktion (FU) zum ersten Mal durch die Person (20) ausgelöst wird,
- Ausführen der unerwarteten Funktionen (FU) durch das Fahrzeug (16), **dadurch gekennzeichnet, dass** die unerwarteten Funktionen (FU) nur ausgelöst werden, wenn das Fahrzeug (16) stillsteht oder wenn die Geschwindigkeit des Fahrzeugs (16) unter einem bestimmten Wert liegt und falls die Fahrzeugsteuereinheit die Verkehrssituation als unkritisch betrachtet.

12. Computerprogramm zum Ausführen eines Verfahrens nach Anspruch 10 zum Auslösen unerwarteter Funktionen (FU) in einem Fahrzeug (16) und/oder zum Betreiben eines Fahrzeugs (16) nach einem der Ansprüche 1 bis , wobei
- das Fahrzeug (16) eine Anzahl von Sensoren (18), die im Inneren des Fahrzeugs (16) angeordnet sind, aufweist, wobei die Sensoren (18) für eine Interaktion (IN) mit einer oder mehr Personen (20), die sich innerhalb oder in der Umgebung des Fahrzeugs (16) befinden, geeignet sind, wobei das Computerprogramm Programmmittel aufweist, um eine Fahrzeugsteuereinheit (14) zu veranlassen, die folgenden Schritte auszuführen, wenn das Computerprogramm auf der Fahrzeugsteuereinheit (14) ausgeführt wird:
- Auslösen von einer oder mehr unerwarteten Funktionen (FU) bei einer Interaktion (IN) zwischen den Sensoren (18) und der Person (20), wobei
o die Interaktion (IN) der Person (20) unbekannt oder unerwartet ist, wenn die Funktion (FU) zum ersten Mal durch die Person (20) ausgelöst wird,
- Ausführen der unerwarteten Funktionen (FU) durch das Fahrzeug (16),
**dadurch gekennzeichnet, dass** die unerwarteten Funktionen (FU) nur ausgelöst werden, wenn das Fahrzeug (16) stillsteht oder wenn die Geschwindigkeit des Fahrzeugs (16) unter einem bestimmten Wert liegt und falls die Fahrzeugsteuereinheit die Verkehrssituation als unkritisch betrachtet.

## Revendications

1. Véhicule (16) comprenant :
- des capteurs (18) installés à l'intérieur du véhicule (16),
- les capteurs (18) étant adaptés pour coopérer (IN) avec une ou plusieurs personnes (20) qui se trouvent dans le véhicule (16) ou dans l'environnement de celui-ci,
- les capteurs (18) déclenchant une ou plusieurs fonctions inattendues (FU) exécutées par le véhicule (16) lors d'une interaction (IN) entre les capteurs (18) et la personne (20), l'interaction (IN) étant inconnue ou inattendue pour la personne (20), au moins lorsque la fonction (FU) est déclenchée la première fois par la personne (20),
véhicule **caractérisé en ce que**
les fonctions inattendues (FU) sont déclenchées seulement lorsque le véhicule (16) est à l'arrêt ou lorsque la vitesse du véhicule (16) est inférieure à une certaine valeur et si l'unité de commande du véhicule considère que l'état du trafic n'est pas critique.

2. Véhicule (16) selon la revendication 1,
**caractérisé en ce que**
les capteurs (18) ont également des fonctions de déclenchement qui sont connues de la personne (20).

3. Véhicule (16) selon l'une des revendications précédentes,
**caractérisé en ce que**
les capteurs (18) sont sous la forme de micros-caméras, capteurs de suivi des yeux ou capteurs de commande de geste.

4. Véhicule (16) selon l'une des revendications précédentes,
**caractérisé en ce que**
les capteurs (18) sont des capteurs de force, des jauges de contraintes, des éléments piézoélectriques, des capteurs de proximité ou des capteurs tactiles.

5. Véhicule (16) selon la revendication 4,
**caractérisé en ce que**
les capteurs (18) sont réalisés sous la forme de circuits électroniques imprimés et/ou de textiles intelligents.

6. Véhicule (16) selon l'une des revendications 4 ou 5,
**caractérisé en ce que**
les capteurs (18) sont installés dans le véhicule (16) pour être invisibles ou cachés à la personne (20) ou ne pas être remarqués.

7. Véhicule (16) selon l'une des revendications précédentes, **caractérisé en ce que**
le véhicule a au moins un composant et les capteurs (18) sont prévus sur le côté avant, à l'intérieur ou le côté arrière du composant.

8. Véhicule (16) selon l'une des revendications précédentes, **caractérisé en ce que**
les fonctions inattendues (FU) et/ou les interactions (IN) pour lesquelles les fonctions inattendues (FU) sont exécutées, sont téléchargeables par internet (22) ou peuvent être mises à jour.

9. Véhicule (16) selon l'une des revendications précédentes, **caractérisé en ce que**
les fonctions inattendues (FU) et/ou les interactions (IN) qui exécutent les fonctions inattendues (FU) peuvent être évitées par une personne ayant droit d'accès à l'unité de commande (14) du véhicule.

10. Véhicule (16) selon la revendication 9,
**caractérisé en ce que**
les fonctions inattendues (FU), éditées et/ou les interactions (IN) par lesquelles les fonctions inattendues (FU) sont exécutées peuvent être téléchargées par internet (22).

11. Procédé de déclenchement de fonctions inattendues (FU) dans un véhicule (16),
le procédé comprenant les étapes suivantes consistant à :
- organiser un nombre de capteurs (18) dans le véhicule (16), les capteurs (18) étant adaptés pour une interaction (IN) avec une ou plusieurs personnes (20) qui se trouvent à l'intérieur du véhicule (16) ou dans son environnement,
- déclencher une ou plusieurs fonctions inattendues (FU) avec les capteurs (18) lors d'une interaction (IN) entre les capteurs (18) et la personne (20),
* l'interaction (IN) étant inconnue ou inattendue par la personne (20) lorsque la fonction (FU) est déclenchée la première fois par la personne (20),
- exécuter les fonctions inattendues (FU) avec le véhicule (16),
procédé **caractérisé en ce que**
les fonctions inattendues (FU) sont déclenchées seulement si le véhicule (16) est à l'arrêt ou si la vitesse du véhicule (16) est inférieure à une certaine valeur si l'unité de commande du véhicule considère que l'état du trafic n'est pas critique.

12. Programme d'ordinateur pour exécuter un procédé selon la revendication 10 pour déclencher les fonctions inattendues (FU) dans un véhicule (16) et/ou pour gérer un véhicule (16) selon l'une quelconque des revendications 1 à 10, selon lequel
- le véhicule (16) comporte des capteurs (18) installés dans le véhicule (16), les capteurs (18) étant adaptés pour une interaction (IN) avec une ou plusieurs personnes (20) qui se trouvent dans le véhicule (16) ou dans son environnement,
- le programme d'ordinateur comprenant des moyens de programme pour que l'unité de commande de véhicule (14) exécute les étapes suivantes lorsque le programme d'ordinateur est appliqué par l'unité de commande de véhicule (14) :
- déclencher une ou plusieurs fonctions inattendues (FU) lors d'une interaction (IN) entre les capteurs (18) et la personne (20),
selon lequel
* l'interaction (IN) est inconnue ou inattendue par la personne (20) lorsque la fonction (FU) est déclenchée la première fois par la personne (20),
- exécuter les fonctions inattendues (FU) par le véhicule (16), **caractérisé en ce que**
les fonctions inattendues (FU) sont déclenchées seulement si le véhicule (16) est à l'arrêt ou si la vitesse du véhicule (16) est inférieure à une certaine valeur et si l'unité de commande du véhicule considère que l'état du trafic n'est pas critique.
